(19) **Europäisches Patentamt**
**European Patent Office**
**Office européen des brevets**

(11) **EP 4 022 105 B1**

(12) # EUROPÄISCHE PATENTSCHRIFT

(45) Veröffentlichungstag und Bekanntmachung des Hinweises auf die Patenterteilung:
**22.01.2025 Patentblatt 2025/04**

(21) Anmeldenummer: **20761836.4**

(22) Anmeldetag: **26.08.2020**

(51) Internationale Patentklassifikation (IPC):
*F24S 40/40* (2018.01)     *F24S 70/12* (2018.01)
*F24S 20/20* (2018.01)     *F28F 21/08* (2006.01)
*C22C 38/58* (2006.01)     *C22C 38/48* (2006.01)
*C22C 38/04* (2006.01)     *C22C 38/02* (2006.01)
*C22C 38/00* (2006.01)

(52) Gemeinsame Patentklassifikation (CPC):
**C22C 38/02; C22C 38/001; C22C 38/04; C22C 38/48; C22C 38/58; F24S 20/20; F24S 40/40; F24S 70/12; F28F 21/083;** C21D 2211/001; F24S 70/30

(86) Internationale Anmeldenummer:
**PCT/EP2020/073877**

(87) Internationale Veröffentlichungsnummer:
**WO 2021/037926 (04.03.2021 Gazette 2021/09)**

(54) **VERWENDUNG EINER AUSTENITISCHEN STAHLLEGIERUNG MIT VERBESSERTER KORROSIONSBESTÄNDIGKEIT BEI HOCHTEMPERATURBEANSPRUCHUNG IN EINER SOLARKRAFTANLAGE, ABSORBERROHR, VERFAHREN ZUR HERSTELLUNG EINES ROHRKÖRPERS AUS DER STAHLLEGIERUNG**

USE OF AN AUSTENITIC STEEL ALLOY WITH IMPROVED CORROSION RESISTANCE UNDER HIGH TEMPERATURE STRESS IN A SOLAR POWER PLANT, ABSORBER TUBE, METHOD OF MANUFACTURING A TUBE BODY FROM THE STEEL ALLOY

UTILISATION D'UN ALLIAGE D'ACIER AUSTÉNITIQUE AVEC UNE RÉSISTANCE À LA CORROSION AMÉLIORÉE EN CAS DE CONDITIONS DE TEMPÉRATURE ÉLEVÉE DANS UNE CENTRALE SOLAIRE, TUBE ABSORBEUR, PROCÉDÉ DE FABRICATION D'UN CORPS DE TUBE EN ALLIAGE D'ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2019 DE 102019123174**

(43) Veröffentlichungstag der Anmeldung:
**06.07.2022 Patentblatt 2022/27**

(73) Patentinhaber: **DMV GmbH**
**45473 Mühlheim an der Ruhr (DE)**

(72) Erfinder:
• **SPIEGEL, Michael**
**47259 Duisburg (DE)**

• **SCHRAVEN, Patrik**
**47259 Duisburg (DE)**

(74) Vertreter: **Moser Götze & Partner Patentanwälte mbB**
**Paul-Klinger-Strasse 9**
**45127 Essen (DE)**

(56) Entgegenhaltungen:
**EP-A1- 2 581 464     EP-A1- 2 816 133**
**EP-A1- 2 915 893     CN-A- 101 967 611**
**CN-A- 103 710 643     US-A1- 2011 220 096**
**US-A1- 2014 141 236     US-A1- 2016 363 349**

**Beschreibung**

Die Erfindung betrifft eine Verwendung einer austenitischen Stahllegierung für Einsatztemperaturen von mindestens 600 °C bis 800 °C in einer Solarkraftanlage. Des Weiteren betrifft die Erfindung ein Absorberrohr eines Solarreceivers einer Solarkraftanlage aus einem rohrförmigen Körper aus dieser Stahllegierung sowie einen Solarreceiver mit einem solchen Absorberrohr. Auch betrifft die Erfindung ein Verfahren zum Herstellen eines rohrförmigen Körpers mit einer Deckschicht aus dieser Stahllegierung.

Mit der Entwicklung solarthermischer Kraftwerke sowie dem durch die Energiewende forcierten Rückgang der fossil befeuerten Kraftwerke entsteht der Bedarf an neuen Märkten mit zum Teil hochspezialisierten Anwendungsportfolios und der Notwendigkeit zur Bereitstellung dementsprechender Werkstoffe. Eines dieser Szenarien sind auf Salzschmelzen basierte solarthermische Kraftwerke, in denen Rohre verbaut sind, die analog zum Dampfkraftwerk Wärme transportieren. Der Transport geschieht über durch Solarstrahlung erhitzte Salzschmelzen, insbesondere in der Konstruktionsweise der solarthermischen Kraftwerke als sogenannte Turmreceiver. Hierbei wird die Sonnenstrahlung durch ein Feld einzeln nachgeführter Spiegel (Heliostaten) auf die Spitze eines Turmes konzentriert. Bei diesem Konzept können in der Spitze des Turmes Temperaturen bis über 1.000 °C erreicht werden. In der Turmspitze befindet sich ein Solarreceiver, der die Strahlung in Wärme umwandelt und an ein Wärmeträgermedium abgibt, das die Wärme einem konventionellen Kraftwerksprozess zuführt.

Der Solarreceiver empfängt die Solarstrahlung mit einem Rohrbündel. Dieses Rohrbündel ist zur besseren Absorption der Strahlung fallweise mit einer schwarzen Beschichtung versehen. Im Inneren des Rohres strömt die Salzschmelze, wie zum Beispiel ein Nitratsalzgemisch, welches die Wärme weiterleitet und speichert. In einem Wärmetauscher wird die Wärme von der Salzschmelze auf einen Dampfkreislauf übertragen, der dann über den Carnot-Prozess Strom erzeugt. Die Temperaturen der Salzschmelze betragen in der Regel bis etwa 620 °C, teilweise können bestimmte Teile der Absorberrohre auch heißer werden.

Stähle für diesen Einsatzbereich müssen hohen Korrosions- und thermischen Beanspruchungen standhalten. Auch eine hohe mechanische Stabilität gegenüber zeit- und temperaturabhängiger Kriechschädigung, sowie thermomechanischer Ermüdung durch Überlagerung einer mechanischen Ermüdungsbelastung mit einer zyklischen thermischen Belastung ist erforderlich. Gefordert ist damit eine entsprechend hohe Gefügestabilität. Hierbei betreffen die sich in Abhängigkeit von Temperatur und Zeit abspielenden Veränderungen im Wesentlichen die Versetzungsanordnung, das Korngefüge sowie die Ausscheidungen.

Neben nickelbasierten austenitischen Stählen, die wegen des hohen Ni-Gehaltes sehr kostenintensiv sind, werden zum Beispiel in der Offenlegungsschrift WO 2016/116227 A1 auch austenitische Cr-Ni-Stähle für diesen Einsatzzweck offenbart. Die Stahlzusammensetzung für Absorberrohre eines solarthermischen Kraftwerks umfasst auf Gewichtsbasis: 0 % bis 0,025 % C; 0,05 % bis 0,16 % N; 2,4 % bis 2,6 % Mo; 0,4 % bis 0,7 % Si; 0,5 % bis 1,63 % Mn; 0 % bis 0,0375 % P; 0 % bis 0,0024 % S; 17,15 % bis 18.0 % Cr; 12,0 % bis 12,74 % Ni; 0,0025 % bis 0,0045 % B und enthält als Rest Fe und ggf. übliche Verunreinigungen. Dieser Stahl ist für einen Temperaturbereich von bis zu 580 °C am Absorberrohr ausgelegt.

Die Offenlegungsschrift WO 2015/014592 A2 beschreibt auch für einen Temperaturbereich von bis zu 580 °C am Absorberrohr einen austenitischen Stahl mit folgender Legierungszusammensetzung auf Gewichtsbasis: 0,08 % oder weniger C; 0 % bis 0,18% N; 0 % bis 3,0 % Mo; 0 % bis 1,0 % Si; 0 % bis 1,0 % Mn; 0 % bis 0,035 % P; 0 % bis 0,015 % S; 16,0% bis 19,0% Cr; 9,0 % bis 14,0 % Ni; 0,0015 % bis 0,005 % B; 0 % bis 0,23 % Cu; 0 % bis 0,007 % Al; 0 % bis 0,013% Nb; 0 % bis 0,12 % V; 0 % bis 0,19 % Co; und Ti, wobei wenigstens eine der folgenden beiden Bedingungen erfüllt ist: Ti/C wenigstens 6; Ti 0,24 % - 0,64 % und enthält als Rest Fe und ggf. übliche Verunreinigungen.

Nachteilig bei den bekannten Stahlsorten ist, dass diese nicht für Einsatztemperaturen von mindestens 600 °C bis etwa 800 °C am Absorberrohr ausgelegt sind, was zu einer deutlich verbesserten Wirtschaftlichkeit von Solarkraftwerken, insbesondere von salzschmelzenbasierten Solarkraftwerken, führen würde.

Des Weiteren sind aus der europäischen Offenlegungsschrift EP 1 502 966 A2 Teile einer Dampfturbine bekannt, die bei Temperaturen von 650 °C oder höher betrieben werden und aus einer austenitischen, hitzebeständigen Stahllegierung mit folgender chemischer Zusammensetzung jeweils in Gewichts-% hergestellt sind: C: 0,45 oder weniger; Si: 1,0 oder weniger; Mn: 2,0 oder weniger; Cr: 19,0 bis 25,0; Ni: 18,0 bis 45,0; Mo: 2,0 oder weniger; Nb: 0,1 bis 0,4; W: 8,0 oder weniger; Ti: 0,6 oder weniger; Al: 0,6 oder weniger; B: 0,01 oder weniger; N: 0,25 oder weniger; Rest Eisen und unvermeidbare Verunreinigungen.

Auch ist in der japanischen Offenlegungsschrift JP 62199753 A bereits ein austenitischer Stahl beschrieben, der folgende chemische Zusammensetzung jeweils in Gewichts-% aufweist: C: < 0,03; Si: <0.6; Mn: <5,0; P: <0,04; S:<0,03; Cr: 23,0 bis 30,0; Ni: 5,0 bis 18,0; N: 0,25 bis 0,45 oder ferner aufweisend eines oder mehrere der folgenden Elemente: Mo: 0,1 bis 3,0; Nb: 0,05 bis 2,0; Ti: 0,02 bis 0,5; Cu: 0,2 bis 5; B: <0,01; Ce: <0,05 und Ca: <0,1. Auch erfüllt dieser Stahl die Formel: $Ni + 0,5 \times Mn + 30 \times (C + N) >= 20$. Dieser Stahl wird für Rohre in einem Heizapparat zur Rückgewinnung von Soda in der Papierherstellung verwendet und weist eine verbesserte Belastbarkeit und Beständigkeit gegen Korngrenzenkorrosion auf.

Die europäische Offenlegungsschrift EP 2 581 464 A1 offenbart Rohre aus einer austenitischen Stahllegierung mit folgender chemischer Zusammensetzung in Gewichts-%: C: 0,07; Si: 0,4; Mn: 1,2; Cr: 25,0; Ni: 20,0; N: 0,24; Nb: 0,5; Rest Eisen.

Die chinesische Offenlegungsschrift CN 101 967 611 A beschreibt einen rohrförmigen Körper aus einer Stahllegierung umfassend in Gewichts-%: C: 0,068; Si: 0,44; Mn: 1,45; Cr: 24,5; Ni: 20,5; Nb: 0,40; N: 0,25; Rest Eisen.

Auch in der chinesischen Offenlegungsschrift CN 103 710 643 A wird ein nahtloses Rohr aus austenitischem Stahl offenbart, welche folgende chemische Zusammensetzung aufweist (in Gewichts-%): C: 0,04 bis 0,10; Si: <0,75; Mn: <2,0; P: <0,030; S:<0,015; Cr: 24,0 bis 26,0; Ni: 19,0 bis 22,0; N: 0,150 bis 0,350; Nb: 0,20 bis 0,60; Rest Eisen und Verunreinigungen.

In der europäischen Offenlegungsschrift EP 2 915 893 A1 wird ein rohrförmiger Körper beschrieben, dessen austenitische Stahllegierung folgende chemische Zusammensetzung aufweist (in Gewichts-%): C: 0,06; Si: 0,32; Mn: 1,21; P: 0,015; S: 0,0021; Ni: 19,5; Cr: 24,2; Nb: 0,46; N: 0,25; B: 0,0012; Rest Eisen und unvermeidbare Verunreinigungen.

Der Erfindung liegt daher die Aufgabe zugrunde, eine Verwendung einer austenitischen Stahllegierung mit hervorragender Korrosionsbeständigkeit bei Hochtemperaturbeanspruchungen von über 600 °C bis zu 800 °C, in einem Solarkraftwerk, insbesondere in salzschmelzenbasierten Solarkraftwerken, anzugeben. Des Weiteren soll ein Absorberrohr eines Solarreceivers einer Solarkraftanlage aus einem rohrförmigen Körper sowie einen Solarreceiver mit einem solchen Absorberrohr angegeben werden.

Für eine austenitische Stahllegierung wird diese Aufgabe durch die Merkmale des Patentanspruchs 1 gelöst. Vorteilhafte Weiterentwicklungen sind Gegenstand von Unteransprüchen.

Nach der Lehre der Erfindung weist eine austenitische Stahllegierung bestehend aus folgender chemischer Zusammensetzung in Gewichts-%: C: 0,01 bis 0,10; Si: max. 0,75; Mn: max. 2,00; P: max. 0,03; S: max. 0,03; Cr: 23 bis 27; Ni: 17 bis 23; Nb: 0,20 bis 0,6;N: 0,15 bis 0,35; Rest Eisen mit erschmelzungsbedingten Verunreinigungen, bei Einsatztemperaturen von mindestens 600 °C bis 800 °C eine hohe Korrosionsbeständigkeit und mechanische Stabilität gegenüber thermo-mechanischer Ermüdung und eine deutlich verbesserte Wirtschaftlichkeit in Solarkraftwerken, insbesondere in salzschmelzbasierten Solarkraftwerken, auf.

Die austenitische Stahllegierung weist bei hohen Einsatztemperaturen von mindestens 600 °C bis 800 °C etwa gleiche oder sogar verbesserte Korrosionseigenschaften gegenüber herkömmlichen Stahllegierungen und ausreichendes Zeitstandverhalten gegenüber bekannten Legierungen auf.

Durch die Kombination der Legierungselemente Chrom - 23 bis 27 Gewichts-% - und Nickel - 17 bis 23 Gewichts-% - wird vorteilhaft eine korrosionsmindernde Deckschichtbildung unter den Betriebsbedingungen erreicht.

Vorteilhaft kann durch entsprechende Vorkonditionierung eine Deckschichtbildung erzielt werden, wodurch die anfängliche Korrosionsgeschwindigkeit deutlich abgesenkt und die Lebensdauer erhöht wird.

Erfindungsgemäß wird dies durch ein Verfahren zum Herstellen eines rohrförmigen Körpers aus der Stahllegierung erreicht, in dem der rohrförmige Körper bei Glühtemperaturen zwischen 800 °C und 900 °C bei einer Glühzeit von 0,1 h bis 24 h, vorzugsweise 2 bis 4 h, in einer Atmosphäre mit Sauerstoff und/oder Stickstoff in der Weise geglüht wird, dass während des Glühens auf dem Rohrkörper eine Deckschicht mit einer Dicke von mindestens 2 μm, vorteilhaft mindestens 5 μm, und maximal 20 μm erzeugt wird. Die sich durch die erfindungsgemäße Legierungszusammensetzung im Betriebseinsatz oder durch entsprechende Vorkonditionierung bildende korrosionshemmende Deckschicht ist dauerhaft und heilt sich bei mechanischer Beschädigung selbst aus.

Die Deckschicht kann im Zuge einer Vorkonditionierung entweder vor dem betrieblichen Einsatz durch Glühung in geeigneter Atmosphäre, beispielsweise mit Sauerstoff, Stickstoff oder anderen Gasen, so konditioniert werden, dass Schichten, z. B. aus Oxiden oder Nitriden, oder Kombinationen daraus, gebildet werden.

Die Glühung kann aber auch am Vormaterial für die Rohrherstellung, am Bauteil selbst (Absorberrohr) oder direkt im endmontierten Zustand des Bauteils, erfolgen. Vorteilhafte Glühtemperaturen liegen dabei zwischen 800 °C und 900 °C bei einer Glühzeit bei 800 °C von etwa 3 h. Die entstandene Deckschicht weist eine Dicke von mindestens 2 μm, vorteilhaft mindestens 5 μm auf, um hiermit eine anfängliche hohe Korrosionsrate zu vermindern. Höhere Glühtemperaturen korrespondieren dann mit niedrigeren Glühzeiten um eine entsprechende Mindestdicke der Deckschicht zu erzeugen. Jedoch sollte eine maximale Glühtemperatur von 900 °C nicht überschritten werden. Auch sollte bei einer Vorkonditionierung durch Glühen, die Deckschicht eine Dicke von 20 μm nicht überschreiten, um ein Abplatzen der Deckschicht zu verhindern. Es ist ebenfalls möglich, die Vorkonditionierung unter Beteiligung einer Al-haltigen Beschichtung durchzuführen und so die Korrosionsbeständigkeit weiter zu verbessern, was aber nicht beansprucht wird. Zum anderen wird mit der Legierung auch eine hohe Resistenz gegenüber thermischer Ermüdung, das heißt nach einer größeren Zahl von Temperaturwechseln, erreicht.

Die erforderliche Festigkeit gegenüber Kriechschädigung, das heißt eine geringe zeit- und temperaturabhängige plastische Verformung unter konstanter Last, wird durch das Ausscheiden von Karbiden vom Typ M23C6 bzw. Nb(C,N) erreicht. Hierfür wird der erforderliche Mindestgehalt an Nb abhängig vom vorliegenden C- und N-Gehalt des Stahls bei der Erschmelzung nach folgender Formel (1) festgelegt:

Formel (1): 0,3 < Nb/(C+N) < 3,8

Als vorteilhaft auf die Korrosions- und mechanischen Eigenschaften haben sich folgende Legierungsgehalte für die austenitische Stahllegierung in Gewichts-% herausgestellt: C: 0,04 bis 0,10, besonders vorteilhaft 0,05 bis 0,08; Si: min. 0,1; Mn: min. 0,6; Cr: 23 bis 25; Ni: min. 20, besonders vorteilhaft min. 21; N: 0,20 bis 0,30.

Als besonders günstig für die Kombination der geforderten Eigenschaften hat sich die Einhaltung folgender Grenze für Nb, C und N nach folgender Formel (2) herausgestellt:

Formel (2): 0,4 < Nb/(C+N) < 2,5

Die erforderliche Festigkeit gegenüber Kriechschädigung wird durch das Ausscheiden von Karbiden vom Typ M23C6 bzw. Nb(C,N) erreicht. Dazu sind die Legierungselemente C und N sowie Nb und Cr notwendig. Das Zulegieren von Nb wirkt im Vergleich zu anderen Sonderkarbid- bzw. Nitridbildnern, wie Ti und V, zusätzlich kornfeinend, ein Effekt, der ebenfalls zu einer erhöhten Korrosionsbeständigkeit durch feineres Korn führt.

Aus der Stahllegierung können vorteilhaft flache Stahlprodukte, wie zum Beispiel Bänder oder Bleche oder rohrförmige Körper als nahtlose oder geschweißte Rohre erzeugt werden. Geschweißte Rohre werden dabei vorteilhaft aus entsprechend eingeformten Bändern oder Blechen hergestellt. Nahtlose Rohre können mit den üblichen Rohrherstellungsverfahren "Mannesmann-Verfahren" oder zum Beispiel mittels Strangpressen hergestellt werden.

Eine Anwendung von rohrförmigen Körpern aus der Stahllegierung ist dabei als Absorberrohr eines Solarreceivers einer Solarkraftanlage zum Transport eines flüssigen Wärmeträgers, insbesondere einer Salzschmelze.

Zur Verbesserung der Absorberleistung weist das Absorberrohr in einer vorteilhaften Ausgestaltung der Erfindung eine auf die Außenoberfläche aufgebrachte wärmeabsorbierende schwarze Beschichtung auf. Diese kann nachträglich zum Beispiel als Lack aufgebracht oder aus Precursern mit Hilfe thermischer Verfahren erzeugt werden. Letztere können zum Beispiel Sol-Gel-Schichten sein, die nach dem Auftragen auf das Rohr durch Sonneneinstrahlung aushärten.

Entsprechend sieht eine Verwendung eines rohrförmigen Körpers hergestellt aus einer austenitischen Stahllegierung vor, diese als Absorberrohr eines Solarreceivers zum Transport eines flüssigen Wärmeträgers, insbesondere einer Salzschmelze einzusetzen. Entsprechend weist ein Solarreceiver ein Absorberrohr aus einem rohrförmigen Körper aus einer austenitischen Stahllegierung auf.

Versuche haben gezeigt, dass bei geforderten Einsatztemperaturen der Absorberrohre von 600 °C und mehr, aufgrund der höheren Korrosionsbeanspruchung, der Chromgehalt auf mindestens 23 Gewichts-% sowie der Nickelanteil auf mindestens 17 Gewichts-% erhöht werden muss.

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen erheblich von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in der erfindungsgemäßen Legierung näher eingegangen werden. Nachfolgend werden die positiven Effekte der erfindungsgemäß verwendeten Legierungselemente beschrieben: Kohlenstoff C: Kohlenstoff wird benötigt zur Bildung von Karbiden, stabilisiert den Austenit und erhöht die Festigkeit. Höhere Gehalte an C verschlechtern die Schweißeigenschaften und führen zur Verschlechterung der Dehnungs- und Zähigkeitseigenschaften, weshalb ein maximaler Gehalt von weniger als 0,1 Gewichts-% festgelegt wird. Um eine feine Ausscheidung von Karbiden zu erreichen, ist eine Mindestzugabe von 0,01 Gewichts-% erforderlich. Für eine optimale Kombination aus mechanischen Eigenschaften insbesondere in Zusammenwirken mit N, und der Schweißbarkeit wird der C-Gehalt vorteilhaft auf 0,04 bis 0,1 Gewichts-%, besonders vorteilhaft auf 0,05 bis 0,08 Gewichts-% festgelegt.

Stickstoff N: Stickstoff ist gewöhnlich ein Begleitelement aus der Stahlherstellung. Ein Abbinden des Stickstoffes in Form von Nitriden ist vorteilhaft durch Zulegieren von Nb möglich. Das führt zusammen mit Chromkarbiden zu einer zusätzlichen Festigkeitssteigerung. Daher hat die erfindungsgemäße Legierung einen Mindestgehalt von 0,15 Gewichts-%, welcher in Zusammenwirken mit Nb und C zur Bildung festigkeitssteigernder Nb(C, N) führt. Gelöster Stickstoff stabilisiert den Austenit und führt bei hohen Konzentrationen zur Versprödung der Korngrenzen. In der erfindungsgemäßen Legierung ist daher der Stickstoffgehalt auf maximal 0,35 Gewichts-% begrenzt. Als vorteilhaft haben sich N-Gehalte von 0,20 bis 0,30 Gewichts-% herausgestellt.

Chrom Cr: Chrom steigert die Festigkeit, verringert die Korrosionsrate und bildet Karbide. In Austeniten kann es jedoch zur Bildung der versprödenden intermetallischen Sigma-Phase (Fe, Cr) führen, weshalb eine obere Grenze von 27, vorteilhaft höchstens 25 Gewichts-% definiert ist. Für den Erhalt der Festigkeit und zum Korrosionsschutz im erfindungsgemäßen Hochtemperatureinsatz der erfindungsgemäßen Legierung ist ein Mindestgehalt von 23 Gewichts-% notwendig.

Nickel Ni: Nickel bewirkt eine Stabilisierung des Austenits zu tieferen Temperaturen und ist daher zur Ausbildung der austenitischen Struktur notwendig. Dies umso mehr, je mehr Chrom z. B. zum Korrosionsschutz notwendig wird. Die Gefahr der sich mit ansteigendem Chromgehalt ausscheidenden, versprödend wirkenden Sigma-Phase wird durch Nickel vermindert, weshalb in der erfindungsgemäßen Legierung bei Chromgehalten zwischen 23 und 27 Gewichts-%, Nickelgehalte von 17 bis 23 Gewichts-% notwendig sind. Höhere Nickelgehalte führen zu einem für den erfindungsgemäßen Einsatz unwirtschaftlichen Konzept. Vor diesem Hintergrund haben sich Ni-Gehalte von mindestens 20, vorteilhaft mindestens 21 Gewichts-% herausgestellt.

Niob Nb: Niob wirkt als Karbidbildner in der erfindungsgemäßen Legierung festigkeitssteigernd durch Ausscheidung von Nb(C,N). Die Niobgehalte müssen mit den C und N Gehalten abgestimmt sein und somit das Auftreten primärer d. h. während des Schmelzprozessen bereits gebildeter Ausscheidungen an Nb(C,N) verhindert werden, weshalb ein Maximalgehalt von 0,6 Gewichts-% festgelegt wird. Zur Ausscheidung der erwünschten Gehalte an sekundärem Nb(C,N) wird in der erfindungsgemäßen Legierung ein Gehalt von mindestens 0,2 Gewichts-% festgelegt.

Mangan Mn: Mangan stabilisiert den Austenit, kann also als Ersatz für einen Nickelanteil eingesetzt werden. Hierfür ist optional ein Mindestgehalt von 0,6 Gewichts-% notwendig. Da Mn aber im Vergleich zu Nickel die Korrosionsbeständigkeit erniedrigt, ist der Gehalt auf max. 2 Gewichts-% beschränkt.

Silizium Si: Die Zugabe von Silizium erhöht allgemein die Korrosionsbeständigkeit durch Beschleunigung der Bildung einer $Cr_2O_3$-Schicht. Hierfür wird optional ein Mindestgehalt von 0,1 Gewichts-% Si zulegiert. Hohe Gehalte an Silizium bewirken eine Beschleunigung der Ausscheidungskinetik der intermetallischen Sigma-Phase und erschweren den Schweißprozess. Daher wird der Siliziumgehalt auf max. 0,75 Gewichts-% limitiert.

Phosphor P: Phosphor ist ein Spuren- oder Begleitelement aus dem Eisenerz und wird im Eisengitter als Substitutionsatom gelöst. Es wird in der Regel versucht, den Phosphorgehalt soweit wie möglich abzusenken, da er unter anderem durch seine geringe Diffusionsgeschwindigkeit stark seigerungsanfällig ist und im hohen Maße die Zähigkeit vermindert. Durch die Anlagerung von Phosphor an den Korngrenzen können Risse entlang der Korngrenzen beim Warmwalzen auftreten. Aus vorgenannten Gründen ist der Phosphorgehalt auf Werte kleiner 0,03 Gewichts-% begrenzt.

Schwefel S: Schwefel ist wie Phosphor als Spuren- oder Begleitelement im Eisenerz gebunden oder wird bei der Erzeugung über die Hochofenroute durch Koks eingetragen. Er ist im Stahl im Allgemeinen unerwünscht, da er zu starker Seigerung neigt und stark versprödend wirkt, wodurch die Dehnungs- und Zähigkeitseigenschaften verschlechtert werden. Es wird daher versucht, möglichst geringe Mengen an Schwefel in der Schmelze zu erreichen (z. B. durch eine Tiefentschwefelung). Aus vorgenannten Gründen ist der Schwefelgehalt auf Werte kleiner 0,03 Gewichts-% begrenzt.

Durch die Legierungszusammensetzung der Stahllegierung wird eine sehr wirtschaftliche Anwendung im Bereich solarthermischer Anlage bei hohen Einsatztemperaturen von 600 °C und darüber möglich.

Die nachfolgende Tabelle 1 zeigt die chemische Zusammensetzung der untersuchten Werkstoffe in Gewichts-% (auszugsweise):

| Stahl | C | Si | Mn | Al | Cr | Fe | Ni | Mo | Ti | Nb | Co | N |
|---|---|---|---|---|---|---|---|---|---|---|---|---|
| 1 (Vergl.) | 0,09 | 0,22 | 0,8 | 0,005 | 18,3 | Bal. | 9,07 | 0,3 | 0,009 | 0,3 | 0,092 | 0,05 |
| 1 (Erf.) | 0,059 | 0,36 | 1,1 | nd | 25,6 | Bal. | 21,2 | nd | nd | 0,46 | - | 0,2 |
| 2 (Vergl.) | 0,06 | <0,3 | <1 | <0,025 | 27,1 | Bal. | 32,3 | nd | nd | 0.8 | - | 0,02 |
| 3 (Vergl.) | 0,05 | 0,08 | 0,06 | 1,3 | 22,1 | 1,9 | 53,1 | 8,7 | 0,40 | <0,02 | 11,9 | <0,01 |
| 4 (Vergl.) | 0,18 | <0,5 | <0,5 | 2,1 | 24,9 | 9,3 | Bal. | - | 0,13 | - | - | - |
| Vergl.: Vergleichslegierung<br>Erf.: erfindungsgemäße Legierung<br>nd: nicht bestimmt<br>Bal.: Rest | | | | | | | | | | | | |

Die gestellten technischen Anforderungen an die austenitische Stahllegierung erfordern eine Kombination von Legierungselementen, die zum einen durch eine Deckschichtbildung unter den Betriebsbedingungen oder durch Konditionierung eine niedrige Korrosionsrate und zum anderen die erforderlichen mechanischen Eigenschaften d. h. hohe Resistenz gegenüber thermischer Ermüdung ermöglicht. Unter wirtschaftlichen Gesichtspunkten sollte der Ni-Gehalt möglichst niedrig sein.

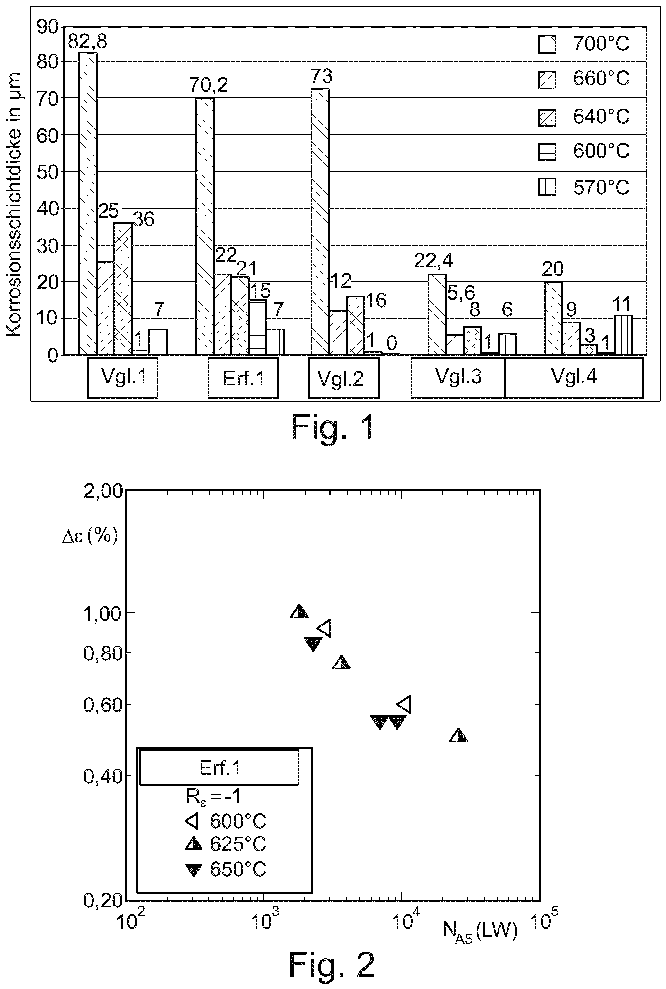

Diese Bedingungen werden mit der erfindungsgemäßen Legierungszusammensetzung voll erfüllt. Während die Vergleichsstähle 2, 3 und 4 einen sehr hohen Ni-Gehalt bzw. eine Ni-Basislegierung aufweisen, weist der Vergleichsstahl 1 und der erfindungsgemäße Stahl 1 deutlich geringere Ni-Gehalte auf. Bezüglich der geforderten Eigenschaften weist der erfindungsgemäße Stahl 1 unter wirtschaftlichen Gesichtspunkten eines niedrigen Ni-Gehaltes, die besten Ergebnisse auf. Entsprechende Probenbleche von den vorgenannten Legierungen sind einem 1000-Stunden Korrosionstest in einer Salzschmelze aus $KNO_3$-$NaNO_3$ bei Temperaturen von 700 °C, 660 °C, 640 °C, 600 °C und 570 °C unterzogen worden. Die Versuchsergebnisse für die untersuchten Vergleichs-Legierungen 1 bis 4 und die erfindungsgemäße Legierung 1 (in der Figur 1 als Vgl. 1, Vgl. 2, Vgl. 3, Vgl. 4 und Erf.1 bezeichnet) sind in Form eines Säulendiagramms je Legierung in der Figur 1 dargestellt. Je Legierung sind 5 Säulen dargestellt, die von links nach rechts den Temperaturen 700 °C, 660 °C, 640 °C, 600 °C und 570 °C der Salzschmelze zugeordnet sind. Auf einer y-Achse ist eine Dicke einer sich während des Korrosionstests bildenden Korrosionsschicht in $\mu$m aufgetragen, die als Maß für den Korrosionsangriff zu interpretieren ist. Der Korrosionsangriff für den erfindungsgemäßen Stahl 2 ist vergleichsweise moderat und gemessen an den geringeren Legierungskosten optimal.

Das thermische Ermüdungsverhalten einer Probe aus dem erfindungsgemäßen Stahl 1 (Erf.1) ist in einem Diagramm als Figur 2 gezeigt. Auf einer y-Achse ist ein Wert $\Delta\varepsilon$ als Dehnung der Probe zwischen Versuchsanfang und -ende in Prozent zwischen 0,2 bis 2,0 aufgetragen und auf der x-Achse eine Anzahl von Lastwechseln als Anrisswechselzahl für ein Lastabfallkriterium von 5 % $N_{A5}$ (LW) mit Werten zwischen $10^2$ bis $10^5$. $R_\varepsilon$=-1 weist auf eine wechselnde Beanspruchung während des Schwingversuchs hin. Der erfindungsgemäße Stahl 1 (Erf.1) zeigt eine hervorragende Stabilität unter Wechselbeanspruchung, die nahezu unabhängig von der Temperatur ist. Diese Eigenschaft ist unter Betriebsbedingungen aufgrund der relativ häufigen Temperaturzyklen eines Solarkraftwerkes von besonderer Wichtigkeit.

## Patentansprüche

1. Verwendung einer austenitischen Stahllegierung für Einsatztemperaturen von mindestens 600 °C bis 800 °C in einer Solarkraftanlage, insbesondere in einer salzschmelzenbasierten Solarkraftanlage, wobei diese Stahllegierung aus folgender chemischer Zusammensetzung in Gewichts-% besteht:

   C: 0,01 bis 0,10
   Si: max. 0,75
   Mn: max. 2,00
   P: max. 0,03
   S: max. 0,03
   Cr: 23 bis 27
   Ni: 17 bis 23
   Nb: 0,2 bis 0,6
   N: 0,15 bis 0,35
   Rest Eisen mit erschmelzungsbedingten Verunreinigungen.

2. Verwendung nach Anspruch 1, wobei die Stahllegierung in Gewichts-% Folgendes aufweist:

   C: 0,04 bis 0,10, vorteilhaft 0,05 bis 0,08
   Si: min. 0,1
   Mn: min. 0,6
   Cr: 23 bis 25
   Ni: min. 20, vorteilhaft min. 21
   N: 0,20 bis 0,30

3. Verwendung nach Anspruch 1 oder 2, wobei die Stahllegierung in Gewichts-% Folgendes aufweist:

$$0,3 < Nb/(C+N) < 3,8, \text{ insbesondere } 0,4 < Nb/(C+N) < 2,5$$

4. Absorberrohr eines Solarreceivers einer Solarkraftanlage zum Transport eines flüssigen Wärmeträgers, insbesondere einer Salzschmelze, hergestellt aus einem rohrförmigen Körper aus einer austenitischen Stahllegierung für Einsatztemperaturen von mindestens 600 °C bis 800 °C, wobei die Stahllegierung aus folgender chemischer Zusammensetzung in Gewichts-% besteht:

   C: 0,01 bis 0,10
   Si: max. 0,75
   Mn: max. 2,00
   P: max. 0,03

S: max. 0,03
Cr: 23 bis 27
Ni: 17 bis 23
Nb: 0,2 bis 0,6
N: 0,15 bis 0,35
Rest Eisen mit erschmelzungsbedingten Verunreinigungen.

5. Absorberrohr nach Anspruch 4, **dadurch gekennzeichnet, dass** der rohrförmige Körper ein nahtloses Rohr ist.

6. Absorberrohr nach Anspruch 4, **dadurch gekennzeichnet, dass** der rohrförmige Körper ein geschweißtes Rohr ist.

7. Absorberrohr nach einem der Ansprüche 4 bis 6, wobei die Stahllegierung des rohrförmigen Körpers in Gewichts-% Folgendes aufweist:

C: 0,04 bis 0,10, vorteilhaft 0,05 bis 0,08
Si: min. 0,1
Mn: min. 0,6
Cr: 23 bis 25
Ni: min. 20, vorteilhaft min. 21
N: 0,20 bis 0,30.

8. Absorberrohr nach einem der Ansprüche 4 bis 7, wobei die Stahllegierung des rohrförmigen Körpers in Gewichts-% Folgendes aufweist:

$$0,3 < Nb/(C+N) < 3,8, \text{ insbesondere } 0,4 < Nb/(C+N) < 2,5.$$

9. Absorberrohr nach einem der Ansprüche 4 bis 8, **gekennzeichnet durch** eine auf die Außenoberfläche aufgebrachte wärmeabsorbierende Beschichtung.

10. Absorberrohr nach Anspruch 9, **dadurch gekennzeichnet, dass** die Beschichtung ein Lackauftrag oder eine Sol-Gel-Beschichtung ist.

11. Solarreceiver mit einem Absorberrohr nach mindestens einem der Ansprüche 4 bis 10.

12. Verfahren zum Herstellen eines rohrförmigen Körpers aus einer austenitischen Stahllegierung für Einsatztemperaturen von mindestens 600 °C bis 800 °C, wobei die Stahllegierung aus folgender chemischer Zusammensetzung in Gewichts-% besteht:

C: 0,01 bis 0,10
Si: max. 0,75
Mn: max. 2,00
P: max. 0,03
S: max. 0,03
Cr: 23 bis 27
Ni: 17 bis 23
Nb: 0,2 bis 0,6
N: 0,15 bis 0,35
Rest Eisen mit erschmelzungsbedingten Verunreinigungen, **dadurch gekennzeichnet, dass** der rohrförmige Körper bei Glühtemperaturen zwischen 800 °C und 900 °C bei einer Glühzeit von 0,1 h bis 24 h, vorzugsweise 2 bis 4 h, in einer Atmosphäre mit Sauerstoff und/oder Stickstoff in der Weise geglüht wird, dass während des Glühens auf dem Rohrkörper eine Deckschicht mit einer Dicke von mindestens 2 $\mu$m, vorteilhaft mindestens 5 $\mu$m, und maximal 20 $\mu$m erzeugt wird.

**Claims**

1. Use of an austenitic steel alloy for operating temperatures of at least 600°C to 800°C in a solar power plant, in particular in a molten salt-based solar power plant, wherein this steel alloy consists of the following chemical composition in weight %:

C: 0.01 to 0.10
Si: max. 0.75
Mn: max. 2.00
P: max. 0.03
S: max. 0.03
Cr: 23 to 27
Ni: 17 to 23
Nb: 0.2 to 0.6
N: 0.15 to 0.35
the remainder being iron with impurities resulting from smelting.

2. Use according to claim 1, wherein the steel alloy comprises, in weight %, the following:

C: 0.04 to 0.10, advantageously 0.05 to 0.08
Si: min. 0.1
Mn: min. 0.6
Cr: 23 to 25
Ni: min. 20, advantageously min. 21
N: 0.20 to 0.30

3. Use according to either claim 1 or claim 2, wherein the steel alloy comprises, in weight %, the following:

$$0.3 < Nb/(C+N) < 3.8, \text{ in particular } 0.4 < Nb/(C+N) < 2.5$$

4. Absorber tube of a solar receiver of a solar power plant for transporting a liquid heat carrier, in particular a molten salt, made of a tubular body made of an austenitic steel alloy for operating temperatures of at least 600°C to 800°C, wherein the steel alloy consists of the following chemical composition in weight %:

C: 0.01 to 0.10
Si: max. 0.75
Mn: max. 2.00
P: max. 0.03
S: max. 0.03
Cr: 23 to 27
Ni: 17 to 23
Nb: 0.2 to 0.6
N: 0.15 to 0.35
the remainder being iron with impurities resulting from smelting.

5. Absorber tube according to claim 4, **characterised in that** the tubular body is a seamless tube.

6. Absorber tube according to claim 4, **characterised in that** the tubular body is a welded tube.

7. Absorber tube according to any of claims 4 to 6, wherein the steel alloy of the tubular body comprises, in weight %, the following:

C: 0.04 to 0.10, advantageously 0.05 to 0.08
Si: min. 0.1
Mn: min. 0.6
Cr: 23 to 25
Ni: min. 20, advantageously min. 21
N: 0.20 to 0.30.

8. Absorber tube according to any of claims 4 to 7, wherein the steel alloy of the tubular body comprises, in weight %, the following:

$$0.3 < Nb/(C+N) < 3.8, \text{ in particular } 0.4 < Nb/(C+N) < 2.5.$$

9. Absorber tube according to any of claims 4 to 8, **characterised by** a heat-absorbing coating applied to the outer surface.

10. Absorber tube according to claim 9, **characterised in that** the coating is a lacquer coating or a sol-gel coating.

11. Solar receiver having an absorber tube according to at least one of claims 4 to 10.

12. Method for producing a tubular body from an austenitic steel alloy for service temperatures of at least 600°C to 800°C, wherein the steel alloy consists of the following chemical composition in weight %:

C: 0.01 to 0.10
Si: max. 0.75
Mn: max. 2.00
P: max. 0.03
S: max. 0.03
Cr: 23 to 27
Ni: 17 to 23
Nb: 0.2 to 0.6
N: 0.15 to 0.35

the remainder being iron with impurities resulting from smelting, **characterised in that** the tubular body is annealed at annealing temperatures between 800°C and 900°C for an annealing time of 0.1 h to 24 h, preferably 2 to 4 h, in an atmosphere containing oxygen and/or nitrogen in such a way that during the annealing, a covering layer with a thickness of at least 2 $\mu$m, advantageously at least 5 $\mu$m, and at most 20 $\mu$m is produced on the tubular body.

**Revendications**

1. Utilisation d'un alliage d'acier austénitique pour des températures d'utilisation d'au moins 600°C-800°C dans une centrale solaire notamment dans une centrale solaire utilisant du sel fondu, cet alliage d'acier ayant la composition chimique pondérale en pourcentages suivante:

C: 0,01-0,10
Si: max.0,75
Mn: max. 2,00
P: max. 0,03
S: max. 0,03
Cr: 23-27
Ni: 17-23
Nb: 0,2-0,6
N: 0,15-0,35
reste : Fer avec les impuretés de première fusion.

2. Utilisation selon la revendication 1, selon laquelle l'alliage d'acier a la composition en pourcentages pondéraux suivante:

C: 0,04-0,10, avantageusement 0,05-0,08
Si: min. 0,1
Mn: min. 0,6
Cr: min. 23-25
Ni: min. 20, avantageusement min. 21
N: 0,20-0,30.

3. Utilisation selon la revendication 1 ou 2, l'alliage d'acier ayant la composition pondérale suivante en pourcentage:

$$0,3 < Nb/(C+N) < 3,8 \text{ notamment } 0,4 < Nb/(C+N) < 2,5.$$

4. Tube absorbant de récepteur solaire de centrale solaire pour le transport d'un liquide caloporteur en particulier de sel fondu, réalisé à partir d'un corps tubulaire en un alliage d'acier austénitique pour des températures d'utilisation d'au moins 600°C-800°C, l'alliage d'acier ayant la composition pondérale en pourcentages suivante:

C: 0,01-0,10
Si: max.0,75
Mn: max. 2,00
P: max. 0,03
S: max. 0,03
Cr: 23-27
Ni: 17-23
Nb: 0,2-0,6
N: 0,15-0,35
reste: Fer avec les impuretés de première fusion.

5. Tube absorbeur selon la revendication 4, **caractérisé en ce que** le corps de forme tubulaire est un tube sans soudure.

6. Tube absorbeur selon la revendication 4, **caractérisé en ce que** le corps tubulaire est un tube soudé.

7. Tube absorbeur selon l'une des revendications 4 à 6, dans lequel l'alliage d'acier du corps tubulaire a la composition pondérale en pourcentages suivante:

C: 0,04-0,10, avantageusement 0,05-0,08
Si: min. 0,1
Mn: min. 0,6
Cr: 23-25
Ni: min. 20, avantageusement min. 21
N: 0,20-0,30.

8. Tube absorbeur selon l'une des revendications 4 à 7, dans lequel l'alliage d'acier du corps tubulaire a la composition pondérale en pourcentages suivante:

$$0,3 < Nb/(C+N) < 3,8 \text{ notamment } 0,4 < Nb/(C+N) < 2,5.$$

9. Tube absorbeur selon l'une des revendications 4 à 8, **caractérisé par** un revêtement absorbant la chaleur, appliqué sur la surface extérieure.

10. Tube absorbeur selon la revendication 9, **caractérisé en ce que** le revêtement est une application de verni ou un revêtement sol-gel.

11. Récepteur solaire avec un tube absorbeur selon au moins l'une des revendications 4 à 10.

12. Procédé de fabrication d'un corps tubulaire en un alliage d'acier austénitique pour des températures d'utilisation d'au moins 600°C-800°C, l'alliage d'acier ayant la composition chimique pondérale en pourcentages suivante:

C: 0,01-0,10
Si: max. 0,75
Mn: max. 2,00
P: max. 0,03
S: max. 0,03
Cr: 23-27
Ni: 17-23
Nb: 0,2-0,6

N: 0,15-0,35

reste : Fer avec les impuretés liées à la première fusion, procédé **caractérisé en ce que** le corps tubulaire est recuit à des températures de recuit comprises entre 800°C et 900°C pour une durée de recuit de 0,1 h-24 h, de préférence 2-4 h dans une atmosphère d'oxygène et/ou d'azote de façon à former sur le corps tubulaire pendant le recuit, une couche de couverture d'une épaisseur d'au moins 2 $\mu$m avantageusement d'au moins 5 $\mu$m et au maximum de 20 $\mu$m.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016116227 A1
- WO 2015014592 A2
- EP 1502966 A2
- JP 62199753 A
- EP 2581464 A1
- CN 101967611 A
- CN 103710643 A
- EP 2915893 A1